(19) Europäisches Patentamt
European Patent Office
Office européen des brevets

(11) EP 4 729 392 A1

(12) EUROPEAN PATENT APPLICATION
published in accordance with Art. 153(4) EPC

(43) Date of publication:
22.04.2026 Bulletin 2026/17

(21) Application number: 24823088.0

(22) Date of filing: 12.04.2024

(51) International Patent Classification (IPC):
B62D 6/00 $^{(2006.01)}$    B62D 5/04 $^{(2006.01)}$

(52) Cooperative Patent Classification (CPC):
B62D 5/0463; B62D 6/008; B62D 15/025

(86) International application number:
PCT/JP2024/014833

(87) International publication number:
WO 2024/257466 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.06.2023 JP 2023098544

(71) Applicant: JTEKT CORPORATION
Kariya-shi, Aichi 448-8652 (JP)

(72) Inventors:
• NAKAHARA, Yuki
Kariya-shi, Aichi 448-8652 (JP)
• TAMURA, Tsutomu
Kariya-shi, Aichi 448-8652 (JP)

(74) Representative: Winter, Brandl - Partnerschaft
mbB
Alois-Steinecker-Straße 22
85354 Freising (DE)

(54) MOTOR CONTROL DEVICE

(57) A motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls drive of an electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using, as a virtual spring reaction force in the equation of motion, a virtual spring reaction force obtained by adding a virtual spring reaction force according to the automatic steering command value to a virtual spring reaction force according to the manual steering command value.

FIG. 2

**Description**

TECHNICAL FIELD

The present disclosure relates to a control device for an electric motor for steering angle control.

BACKGROUND ART

Patent Document 1 discloses a motor control device including: an assist torque command value setting unit that generates an assist torque command value using torsion bar torque; a manual steering command value generation unit that generates a manual steering command value using the torsion bar torque and the assist torque command value; an integrated angle command value calculation unit that calculates an integrated angle command value by adding the manual steering command value to an automatic steering command value; and a switching unit that switches, based on a switching signal, first control for controlling an electric motor based only on the assist torque command value and second control for controlling the electric motor based on the integrated angle command value.

When the driving mode is a manual driving mode, the electric motor is controlled by the first control. In a driving assistance mode in which driving assistance such as lane centering assist (LCA) control is being performed, the electric motor is controlled by the second control.

Related Art Documents

Patent Documents

Patent Document 1: WO 2023/286169

SUMMARY OF THE INVENTION

Problem to be Solved by the Invention

In the first control described in Patent Document 1, when the driver steers the steering wheel, self-aligning torque causes the steering angle to return to the vicinity of zero degrees corresponding to the neutral position of an output shaft. In the second control, when the vehicle deviates from a target travel line due to the driver's steering intervention, the system attempts to return the vehicle to the target travel line using a driving assistance force according to the automatic steering command value. Since the driving assistance force is a force equal to or greater than the self-aligning torque, the steering angle will return in the opposite direction through zero degrees.

Such a driving assistance force may adversely affect the driver's steering feel. In particular, when the vehicle is traveling straight, the driver's steering feel is likely to deteriorate.

An object of the present disclosure is to provide a motor control device that can improve the driver's steering feel in a driving assistance mode.

Means for Solving the Problem

One embodiment of the present disclosure provides a motor control device that controls drive of an electric motor of a steering device. The motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls the drive of the electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using, as a virtual spring reaction force in the equation of motion, a virtual spring reaction force obtained by adding a virtual spring reaction force according to the automatic steering command value to a virtual spring reaction force according to the manual steering command value.

With this configuration, the driver's steering feel can be improved in the driving assistance mode.

The above and other objects, features, and effects of the present disclosure will become apparent from the following description of an embodiment that will be given with reference to the accompanying drawings.

BRIEF DESCRIPTION OF THE DRAWINGS

[FIG. 1] FIG. 1 is a schematic diagram showing a schematic configuration of an electric power steering system to which a motor control device according to an embodiment of the present disclosure is applied.

[FIG. 2] FIG. 2 is a block diagram illustrating an electrical configuration of a motor control ECU.

[FIG. 3] FIG. 3 is a graph showing an example of setting an assist torque command value $T_{as}$ with respect to torsion bar torque $T_{tb}$.

[FIG. 4] FIG. 4 is a schematic diagram showing an example of a reference EPS model.

[FIG. 5] FIG. 5 is a block diagram showing the configuration of a manual steering command value calculation unit.

[FIG. 6] FIG. 6 is a block diagram showing the configuration of an angle control unit.

[FIG. 7] FIG. 7 is a schematic diagram showing an example of the configuration of a physical model of the electric power steering system.

[FIG. 8] FIG. 8 is a block diagram showing the configuration of a disturbance torque estimation unit.

[FIG. 9] FIG. 9 is a schematic diagram showing the configuration of a torque control unit.

[FIG. 10] FIG. 10 is a flowchart showing the procedure of a weight setting process that is performed by a weight setting unit.

[FIG. 11] FIG. 11 is a block diagram showing a modification of the manual steering command value calculation unit.

[FIG. 12] FIG. 12 is a block diagram showing a modification of the motor control ECU.

[FIG. 13] FIG. 13 is a flowchart showing the procedure of a weight setting process that is performed by a weight setting unit in FIG. 12.

MODES FOR CARRYING OUT THE INVENTION

[Description of Embodiment of Disclosure]

One embodiment of the present disclosure provides a motor control device that controls drive of an electric motor of a steering device. The motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls the drive of the electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using, as a virtual spring reaction force in the equation of motion, a virtual spring reaction force obtained by adding a virtual spring reaction force according to the automatic steering command value to a virtual spring reaction force according to the manual steering command value.

With this configuration, the driver's steering feel can be improved in the driving assistance mode.

In the one embodiment of the present disclosure, when calculating the manual steering command value, the manual steering command value calculation unit uses, as a virtual damper reaction force in the equation of motion, a virtual damper reaction force obtained by adding a virtual damper reaction force according to a derivative of the automatic steering command value to a virtual damper reaction force according to a derivative of the manual steering command value.

In the one embodiment of the present disclosure, the manual steering command value calculation unit performs a weighting process on the virtual spring reaction force according to the automatic steering command value using the torsion bar torque or surrounding environment information.

[Detailed Description of Embodiment of Disclosure]

An embodiment of the present disclosure will be described in detail below with reference to the accompanying drawings.

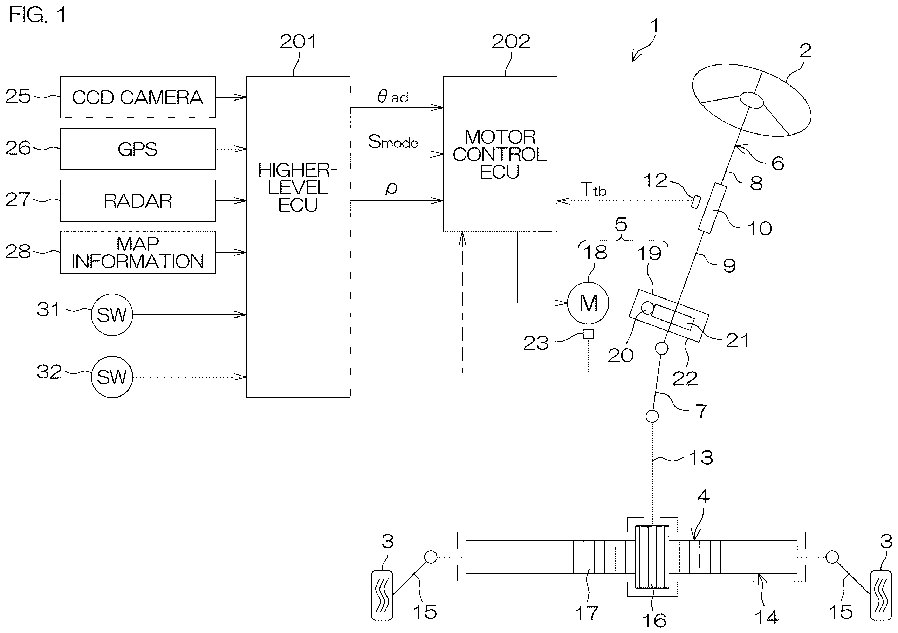

FIG. 1 is a schematic diagram showing a schematic configuration of an electric power steering system to which a motor control device according to an embodiment of the present disclosure is applied.

An electric power steering system 1 includes: a steering wheel 2 that is a steering member for steering a vehicle; a steering operation mechanism 4 that steers steered wheels 3 in conjunction with rotation of the steering wheel 2; and a steering assist mechanism 5 that assists a driver in steering. The steering wheel 2 and the steering operation mechanism 4 are mechanically connected via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected via a torsion bar 10 to be rotatable relative to each other.

A torque sensor 12 is disposed near the torsion bar 10. The torque sensor 12 detects torsion bar torque (steering torque) $T_{tb}$ applied to the steering wheel 2 based on the amount of relative rotational displacement between the input shaft 8 and the output shaft 9. In the present embodiment, for example, the torsion bar torque $T_{tb}$ that is detected by the torque sensor 12 is such that the torque for steering to the right is detected as a positive value and the torque for steering to the left is detected as a negative value. As the absolute value of the torsion bar torque $T_{tb}$ increases, the magnitude thereof increases.

The steering operation mechanism 4 is a rack and pinion mechanism including a pinion shaft 13 and a rack shaft 14 that is a steered shaft. The steered wheels 3 are connected to the ends of the rack shaft 14 via tie rods 15 and knuckle arms (not shown). The pinion shaft 13 is connected to the intermediate shaft 7. The pinion shaft 13 is configured to rotate in conjunction with steering of the steering wheel 2. A pinion 16 is connected to a distal end of the pinion shaft 13.

The rack shaft 14 extends linearly along a right-left direction of the vehicle. A rack 17 that meshes with the pinion 16 is formed on an intermediate portion of the rack shaft 14 in an axial direction. The pinion 16 and the rack 17 convert rotation of the pinion shaft 13 into axial movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial movement of the rack shaft 14. The steered wheels 3 are thus steered.

The steering assist mechanism 5 includes an electric motor 18 that generates a steering assist force (assist torque), and a speed reducer 19 that amplifies output torque of the electric motor 18 and transmits the amplified torque to the steering operation mechanism 4. The speed reducer 19 is a worm gear mechanism including a worm gear 20 and a worm wheel 21 that meshes with the worm gear 20. The speed reducer 19 is housed in a gear housing 22 that is a transmission mechanism housing.

Hereinafter, the reduction ratio (gear ratio) of the speed reducer 19 is represented by N. The reduction ratio N is defined as a ratio ($\theta_{wg}/\theta_{ww}$) of a worm gear angle $\theta_{wg}$ that is the rotational angle of the worm gear 20 to a worm wheel angle $\theta_{ww}$ that is the rotational angle of the worm wheel 21.

The worm gear 20 is rotationally driven by the electric motor 18. The worm wheel 21 is connected to the output shaft 9 to be rotatable together.

When the worm gear 20 is rotationally driven by the electric motor 18, the worm wheel 21 is rotationally driven such that motor torque is applied to the steering shaft 6 and the steering shaft 6 (output shaft 9) is rotated. The rotation of the steering shaft 6 is then transmitted to the pinion shaft 13 via the intermediate shaft 7. Rotation of the pinion shaft 13 is converted into axial movement of the rack shaft 14. The steered wheels 3 are thus steered. That is, rotationally driving the worm gear 20 using the electric motor 18 enables steering assist by the electric motor 18 and steering of the steered wheels 3. The electric motor 18 is provided with a rotational angle sensor 23 for detecting the rotational angle of a rotor of the electric motor 18.

The torque that is applied to the output shaft 9 (example of an object to be driven by the electric motor 18) includes motor torque from the electric motor 18 and disturbance torque $T_{lc}$ other than the motor torque. The disturbance torque $T_{lc}$ other than the motor torque includes the torsion bar torque $T_{tb}$, road reaction torque (road load torque) $T_{rl}$, and friction torque $T_f$.

The torsion bar torque $T_{tb}$ is torque that is applied from the steering wheel 2 side to the output shaft 9 due to a force that is applied to the steering wheel 2 by the driver, a force that is generated by steering inertia, etc.

The road reaction torque $T_{rl}$ is torque that is applied from the steered wheel 3 side to the output shaft 9 via the rack shaft 14 due to self-aligning torque that is exerted on tires, a force that is generated by a suspension and tire wheel alignment, a friction force of the rack and pinion mechanism, etc.

The vehicle is equipped with a CCD (Charge Coupled Device) camera 25 that captures an image of the road ahead of the vehicle in the advancing direction, a GPS (Global Positioning System) 26 that detects the position of the vehicle, a radar 27 that detects a road shape and obstacles, and a map information memory 28 that stores map information. The vehicle is further equipped with two mode switches 31, 32 for manually switching steering modes.

As described later, the steering modes include a manual steering mode in which steering is performed by manual driving, and a cooperative steering mode in which steering can be performed based on both manual driving and autonomous driving.

The CCD camera 25, the GPS 26, the radar 27, and the map information memory 28 are connected to a higher-level ECU (ECU: Electronic Control Unit) 201 that performs driving assistance control and autonomous driving control. The higher-level ECU 201 performs surrounding environment recognition, vehicle position estimation, route planning, etc. based on information obtained by the CCD camera 25, the GPS 26, and the radar 27, and the map information, and determines control target values for steering and drive actuators.

In the present embodiment, the higher-level ECU 201 sets an automatic steering command value $\theta_{ad}$ for automatic steering. In the present embodiment, automatic steering control is control for causing the vehicle to travel, for example, along a target travel line (target trajectory). The automatic steering command value $\theta_{ad}$ is a target value of the steering angle for autonomously driving the vehicle along the target travel line.

In the present embodiment, the automatic steering command value $\theta_{ad}$ is expressed as a rotational amount (rotational angle) from a neutral position of the output shaft 9. The rotational amount in a rightward steering direction from the neutral position is expressed as a positive value, and the rotational amount in a leftward steering direction from the neutral position is expressed as a negative value. The automatic steering command value $\theta_{ad}$ is set based on, for example, the vehicle speed, the lateral deviation from the target travel line (lane center line in the present embodiment), and the yaw deviation of the vehicle from the target travel line. A process of setting such an automatic steering command value $\theta_{ad}$ is well known, and therefore will not be described in detail herein.

The automatic steering control (driving assistance control) may be, for example, lane centering assist (LCA) control for assisting in steering such that the vehicle travels at the center of a travel lane, or lane keeping assist (LKA) control for assisting in steering such that the vehicle stays within the travel lane.

The higher-level ECU 201 outputs a curvature $\rho$ of the travel lane where the vehicle is traveling. The curvature $\rho$ is expressed as $\rho = 1/r$, where r is the radius of curvature of the travel lane where the vehicle is traveling. As the curvature $\rho$ increases (as the radius of curvature r decreases), the degree of curve of the curved road increases. The curvature $\rho$ is an example of "surrounding environment information" according to the present disclosure.

The higher-level ECU 201 outputs a steering mode signal $S_{mode}$ indicating whether the steering mode (driving mode) is the manual steering mode (manual driving mode) or the cooperative steering mode (driving assistance mode) based on the operation on the first mode switch 31 and the second mode switch 32.

Specifically, when the first mode switch 31 is turned ON by the driver, the higher-level ECU 201 outputs the steering mode signal $S_{mode}$ indicating that the steering mode is the manual steering mode. When the second mode switch 32 is turned ON by the driver, the higher-level ECU 201 outputs the steering mode signal $S_{mode}$ indicating that the steering mode is the cooperative steering mode.

The automatic steering command value $\theta_{ad}$, the curvature $\rho$, and the steering mode signal $S_{mode}$ are provided to a motor control ECU 202 via an in-vehicle network. The torsion bar torque $T_{tb}$ detected by the torque sensor 12 and an output signal from the rotational angle sensor 23 are input to the motor control ECU 202. The motor control ECU 202 controls the electric motor 18 based on these input signals and information provided from the higher-level ECU 201.

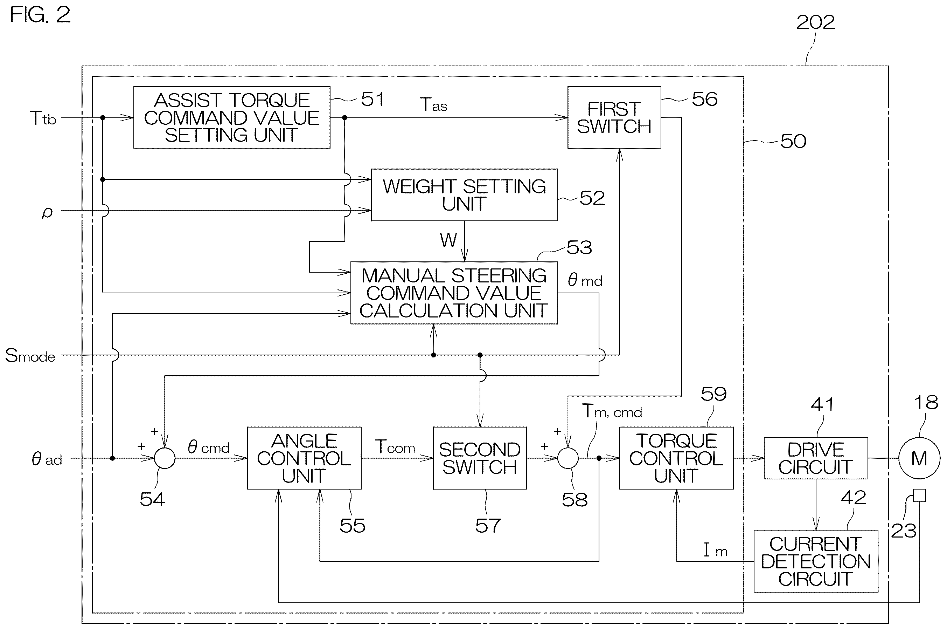

FIG. 2 is a block diagram illustrating an electrical configuration of the motor control ECU 202.

The motor control ECU 202 includes a microcomputer 50, a drive circuit (inverter circuit) 41 that is controlled by the microcomputer 50 and supplies electric power to the electric motor 18, and a current detection circuit 42 that detects a current (hereinafter referred to as "motor current $I_m$") that flows through the electric motor 18.

The microcomputer 50 includes a CPU and a memory (such as a ROM, a RAM, and a non-volatile memory), and functions as a plurality of functional processing units by executing a predetermined program. The plurality of functional processing units includes an assist torque command value setting unit 51, a weight setting unit 52, a manual steering command value calculation unit 53, an integrated angle command value calculation unit 54, an angle control unit 55, a first switch 56, a second switch 57, an addition unit 58, and a torque control unit (current control unit) 59.

The assist torque command value setting unit 51 sets an assist torque command value $T_{as}$ that is a target value of the assist torque necessary for a manual operation. The assist torque command value setting unit 51 sets the assist torque command value $T_{as}$ based on the torsion bar torque $T_{tb}$ detected by the torque sensor 12.

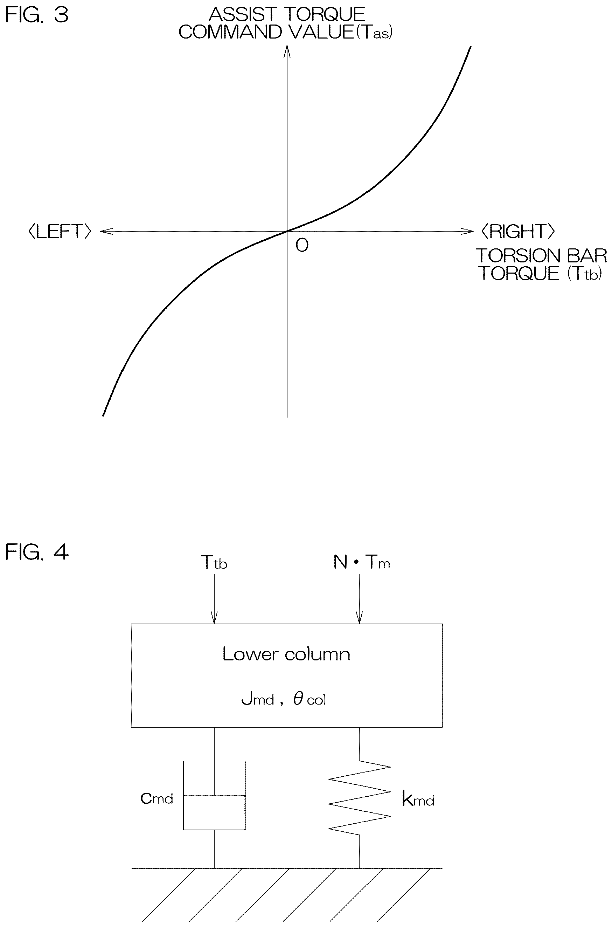

FIG. 3 is a graph showing an example of setting the assist torque command value $T_{as}$ with respect to the torsion bar torque $T_{tb}$.

The assist torque command value $T_{as}$ is set to a positive value when the electric motor 18 should generate a steering assist force for steering to the right, and is set to a negative value when the electric motor 18 should generate a steering assist force for steering to the left. The assist torque command value $T_{as}$ is positive for a positive value of the torsion bar torque $T_{tb}$, and is negative for a negative value of the torsion bar torque $T_{tb}$. The assist torque command value $T_{as}$ is set such that its absolute value increases as the absolute value of the torsion bar torque $T_{tb}$ increases.

The assist torque command value setting unit 51 may calculate the assist torque command value $T_{as}$ by multiplying the torsion bar torque $T_{tb}$ by a preset constant. The assist torque command value $T_{as}$ may be set in consideration of the vehicle speed.

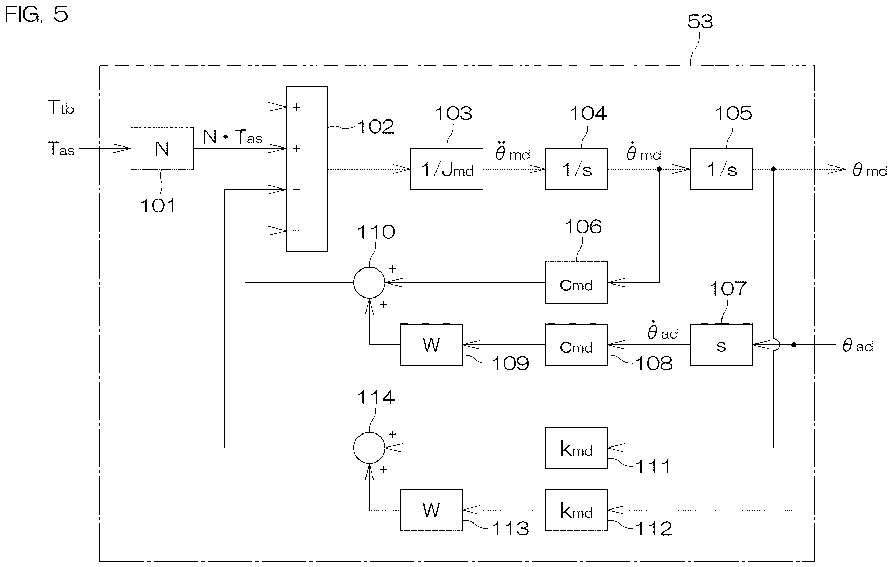

The weight setting unit 52 sets a weight W to be used by the manual steering command value calculation unit 53 (see FIG. 5) based on the torsion bar torque $T_{tb}$ detected by the torque sensor 12 and the curvature $\rho$ provided from the higher-level ECU 201. The weight setting unit 52 will be described in detail later.

The manual steering command value calculation unit 53 is provided to, when the driver operates the steering wheel 2 in the cooperative steering mode, set a steering angle (more exactly, a rotational angle $\theta_c$ of the output shaft 9) according to the steering wheel operation as a manual steering command value $\theta_{md}$. The manual steering command value calculation unit 53 generates the manual steering command value $\theta_{md}$ using the torsion bar torque $T_{tb}$ detected by the torque sensor 12, the assist torque command value $T_{as}$ set by the assist torque command value setting unit 51, the automatic steering command value $\theta_{ad}$ provided from the higher-level ECU 201, and the weight W set by the weight setting unit 52. The manual steering command value calculation unit 53 will be described in detail later.

The integrated angle command value calculation unit 54 calculates an integrated angle command value $\theta_{cmd}$ by adding the manual steering command value $\theta_{md}$ to the automatic steering command value $\theta_{ad}$ set by the higher-level ECU 201.

The angle control unit 55 calculates an integrated motor torque command value $T_{com}$ based on the integrated angle command value $\theta_{cmd}$. The angle control unit 55 will be described in detail later.

The first switch 56 and the second switch 57 are turned ON and OFF in response to the input steering mode signal $S_{mode}$. Specifically, when the steering mode signal $S_{mode}$ indicating that the steering mode is the manual steering mode is input, the first switch 56 is turned ON and the second switch 57 is turned OFF.

When the steering mode signal $S_{mode}$ indicating that the steering mode is the cooperative steering mode is input, the first switch 56 is turned OFF and the second switch 57 is turned ON.

When the first switch 56 is ON and the second switch 57 is OFF, the addition unit 58 outputs the assist torque command value $T_{as}$ as a motor torque command value $T_{m,cmd}$ (= $T_{as}$). When the second switch 57 is ON and the first switch 56 is OFF, the addition unit 58 outputs the integrated motor torque command value $T_{com}$ output from the angle control unit 55 as the motor torque command value $T_{m,cmd}$ (= $T_{com}$).

The motor torque command value $T_{m,cmd}$ that is the output of the addition unit 58 is provided to the torque control unit 59.

The torque control unit 59 drives the drive circuit 41 such that the motor torque of the electric motor 18 is brought closer to the motor torque command value $T_{m,cmd}$. The torque control unit 59 will be described in detail later.

The manual steering command value calculation unit 53 will be described in detail.

First, description will be given of a method for setting the manual steering command value $\theta_{md}$ by the manual steering command value generation unit described in Patent Document 1 (WO 2023/286169).

The manual steering command value generation unit generates the manual steering command value $\theta_{md}$ using a reference EPS model in FIG. 4. The reference EPS model in FIG. 4 is an example of "reference model of steering device" according to the present disclosure.

The reference EPS model is a single inertia model including a lower column. The lower column corresponds to the output shaft 9 and the worm wheel 21. However, this model is merely an example, and an inertia model including a component other than the above (e.g., a rack bar) may also be used. In FIG. 4, $J_{md}$ is the inertia of the lower column (hereinafter referred to as "column inertia"), $\theta_{col}$ is the rotational angle of the lower column, and $T_{tb}$ is the torsion bar torque. The torsion bar torque $T_{tb}$, torque $N \cdot T_m$ acting on the output shaft 9 from the electric motor 18, and the road reaction torque (virtual reaction force) $T_{rl}$ are applied to the lower column.

The road reaction torque $T_{rl}$ is given by the following expression (1) using a spring constant $k_{md}$ of a virtual spring and a viscous damping coefficient $c_{md}$ of a virtual damper.

[Math. 1]

$$T_{rl} = -k_{md} \cdot \theta_{col} - c_{md} \cdot \dot{\theta}_{col} \quad \cdots (1)$$

The spring constant $k_{md}$ and the viscous damping coefficient $c_{md}$ are determined through experiments, analyses, etc. in advance. Hereinafter, $k_{md} \cdot \theta_{col}$ may be referred to as a virtual spring reaction force, and $c_{md}(d\theta_{col}/dt)$ may be referred to as a virtual damper reaction force.

An equation of motion of the reference EPS model is given by the following expression (2).

[Math. 2]

$$J_{md} \cdot \ddot{\theta}_{col} = T_{tb} + N \cdot T_m - k_{md} \cdot \theta_{col} - c_{md} \cdot \dot{\theta}_{col} \quad \cdots (2)$$

In the expression (2), $J_{md} \cdot d^2\theta_{col}/dt^2$ is the moment of inertia acting on the lower column.

The manual steering command value generation unit calculates the rotational angle $\theta_{col}$ of the lower column by solving the differential equation given by the expression (2) by substituting the torsion bar torque $T_{tb}$ detected by the torque sensor 12 into $T_{tb}$ and substituting the assist torque command value $T_{as}$ set by the assist torque command value setting unit 51 into $T_m$. The manual steering command value generation unit generates the obtained rotational angle $\theta_{col}$ of the lower column as the manual steering command value $\theta_{md}$. The method of setting the manual steering command value $\theta_{md}$ in this way will be referred to as a comparative method.

The equation of motion given by the expression (2) is equivalent to an equation of motion in which $T_m$ is replaced by $T_{as}$ and $\theta_{col}$ is replaced by $\theta_{md}$.

In the present embodiment, the manual steering command value calculation unit 53 calculates the manual

steering command value $\theta_{md}$ using the equation of motion (2) of the reference EPS model described above. Specifically, in the present embodiment, the manual steering command value calculation unit 53 calculates the manual steering command value $\theta_{md}$ based on an equation of motion obtained by modifying the equation of motion (2) of the reference EPS model described above.

FIG. 5 is a block diagram showing the configuration of the manual steering command value calculation unit 53.

In FIG. 5, $J_{md}$ is the column inertia. s is a differential operator. $\theta_{md}$ is the manual steering command value, and corresponds to the rotational angle $\theta_{col}$ of the lower column in the comparative method. $c_{md}$ is the viscous damping coefficient of the virtual damper. $k_{md}$ is the spring constant of the virtual spring. The viscous damping coefficient $c_{md}$ of the virtual damper and the spring constant $k_{md}$ of the virtual spring are determined through experiments, analyses, etc. in advance.

The manual steering command value calculation unit 53 includes a reduction ratio multiplication unit 101, an addition/subtraction unit 102, an inertia division unit 103, a first integration unit 104, a second integration unit 105, a first virtual damper reaction force calculation unit 106, a differentiation unit 107, a second virtual damper reaction force calculation unit 108, a first weight multiplication unit 109, a first addition unit 110, a first virtual spring reaction force calculation unit 111, a second virtual spring reaction force calculation unit 112, a second weight multiplication unit 113, and a second addition unit 114.

The reduction ratio multiplication unit 101 converts the assist torque command value $T_{as}$ for a rotary shaft of the electric motor 18 into an assist torque command value $N \cdot T_{as}$ for the output shaft 9 by multiplying the assist torque command value $T_{as}$ by the reduction ratio N of the speed reducer 19.

The torsion bar torque $T_{tb}$, the assist torque command value $N \cdot T_{as}$ for the output shaft 9, a virtual damper reaction force $(c_{md} \cdot d\theta_{md}/dt + W \cdot c_{md} \cdot d\theta_{ad}/dt)$ provided from the first addition unit 110, and a virtual spring reaction force $(k_{md} \cdot \theta_{md} + W \cdot k_{md} \cdot \theta_{ad})$ provided from the second addition unit 114 are input to the addition/subtraction unit 102.

The addition/subtraction unit 102 adds the assist torque command value $N \cdot T_{as}$ for the output shaft 9 to the torsion bar torque $T_{tb}$, and subtracts the virtual damper reaction force $(c_{md} \cdot d\theta_{md}/dt + W \cdot c_{md} \cdot d\theta_{ad}/dt)$ and the virtual spring reaction force $(k_{md} \cdot \theta_{md} + W \cdot k_{md} \cdot \theta_{ad})$ from the addition result. Therefore, the addition/subtraction unit 102 calculates a moment of inertia $J_{md} \cdot d^2\theta_{md}/dt2$ $(= T_{tb} + N \cdot T_{as} - (k_{md} \cdot \theta_{md} + W \cdot k_{md} \cdot \theta_{ad}) - (c_{md} \cdot d\theta_{md}/dt + W \cdot c_{md} \cdot d\theta_{ad}/dt))$ that corresponds to $J_{md} \cdot d^2\theta_{col}/dt^2$ on the left side of the above expression (2).

The inertia division unit 103 calculates a second derivative $d*\theta_{md}/dt*$ of the manual steering command value $\theta_{md}$ by dividing the moment of inertia $J_{md} \cdot d^2\theta_{md}/dt2$ calculated by the addition/subtraction unit 102 by the column inertia $J_{md}$.

The first integration unit 104 calculates a first derivative $d\theta_{md}/dt$ of the manual steering command value $\theta_{md}$ by integrating the second derivative $d^2\theta_{md}/dt^2$ of the manual steering command value $\theta_{md}$.

The second integration unit 105 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53.

The first virtual damper reaction force calculation unit 106 calculates a first virtual damper reaction force $c_{md} \cdot d\theta_{md}/dt$ by multiplying the first derivative $d\theta_{md}/dt$ of the manual steering command value $\theta_{md}$ calculated by the first integration unit 104 by the viscous damping coefficient $c_{md}$.

The differentiation unit 107 differentiates the automatic steering command value $\theta_{ad}$. The second virtual damper reaction force calculation unit 108 calculates a second virtual damper reaction force $c_{md} \cdot d\theta_{ad}/dt$ by multiplying a derivative $d\theta_{ad}/dt$ of the automatic steering command value $\theta_{ad}$ calculated by the differentiation unit 107 by the viscous damping coefficient $c_{md}$.

The first weight multiplication unit 109 multiplies the second virtual damper reaction force $c_{md} \cdot d\theta_{ad}/dt$ by the weight W $(0 \le W \le 1)$ set by the weight setting unit 52.

The first addition unit 110 calculates the virtual damper reaction force $(c_{md} \cdot d\theta_{md}/dt + W \cdot c_{md} \cdot d\theta_{ad}/dt)$ by adding a second virtual damper reaction force $W \cdot c_{md} \cdot d\theta_{ad}/dt$ after weight multiplication to the first virtual damper reaction force $c_{md} \cdot d\theta_{md}/dt$. The virtual damper reaction force $(c_{md} \cdot d\theta_{md}/dt + W \cdot c_{md} \cdot d\theta_{ad}/dt)$ is fed back to the addition/subtraction unit 102.

The first virtual spring reaction force calculation unit 111 calculates a first virtual spring reaction force $k_{md} \cdot \theta_{md}$ by multiplying the manual steering command value $\theta_{md}$ calculated by the second integration unit 105 by the spring constant $k_{md}$.

The second virtual spring reaction force calculation unit 112 calculates a second virtual spring reaction force $k_{md} \cdot \theta_{ad}$ by multiplying the automatic steering command value $\theta_{ad}$ by the spring constant $k_{md}$.

The second weight multiplication unit 113 multiplies the second virtual spring reaction force $k_{md} \cdot \theta_{ad}$ by the weight W $(0 \le W \le 1)$ set by the weight setting unit 52.

The second addition unit 114 calculates the virtual spring reaction force $(k_{md} \cdot \theta_{md} + W \cdot k_{md} \cdot \theta_{ad})$ by adding a second virtual spring reaction force $W \cdot k_{md} \cdot \theta_{ad}$ after weight multiplication to the first virtual spring reaction force $k_{md} \cdot \theta_{md}$. The virtual spring reaction force $(k_{md} \cdot \theta_{md} + W \cdot k_{md} \cdot \theta_{ad})$ is fed back to the addition/subtraction unit 102.

That is, the manual steering command value calculation unit 53 calculates the manual steering command value

$\theta_{md}$ based on an equation of motion given by the following expression (3).
[Math. 3]

$$Jmd \cdot \ddot{\theta}_{md} = T_{tb} + N \cdot Tas - (k_{md} \cdot \theta_{md} + W \cdot k_{md} \cdot \theta ad) - (c_{md} \cdot \dot{\theta}_{md} + W \cdot c_{md} \cdot \dot{\theta}_{ad}) \tag{3}$$

In the expression (3), $(k_{md} \cdot \theta_{md} + W \cdot k_{md} \cdot \theta_{ad})$ is the virtual spring reaction force, and $(c_{md} \cdot d\theta_{md}/dt + c_{md} \cdot d\theta_{ad}/dt)$ is the virtual damper reaction force.

That is, the manual steering command value calculation unit 53 calculates the manual steering command value $\theta_{md}$ using $(k_{md} \cdot \theta_{md} + W \cdot k_{md} \cdot \theta_{ad})$ and $(c_{md} \cdot d\theta_{md}/dt + W \cdot c_{md} \cdot d\theta_{ad}/dt)$ as the virtual spring reaction force $k_{md} \cdot \theta_{col}$ and the virtual damper reaction force $c_{md} \cdot d\theta_{col}/dt$ in the above expression (2), respectively.

Since the manual steering command value calculation unit 53 has such a configuration, it is possible to adjust the ability of the vehicle to follow the target travel line by changing the weight W. The reason will be described later.

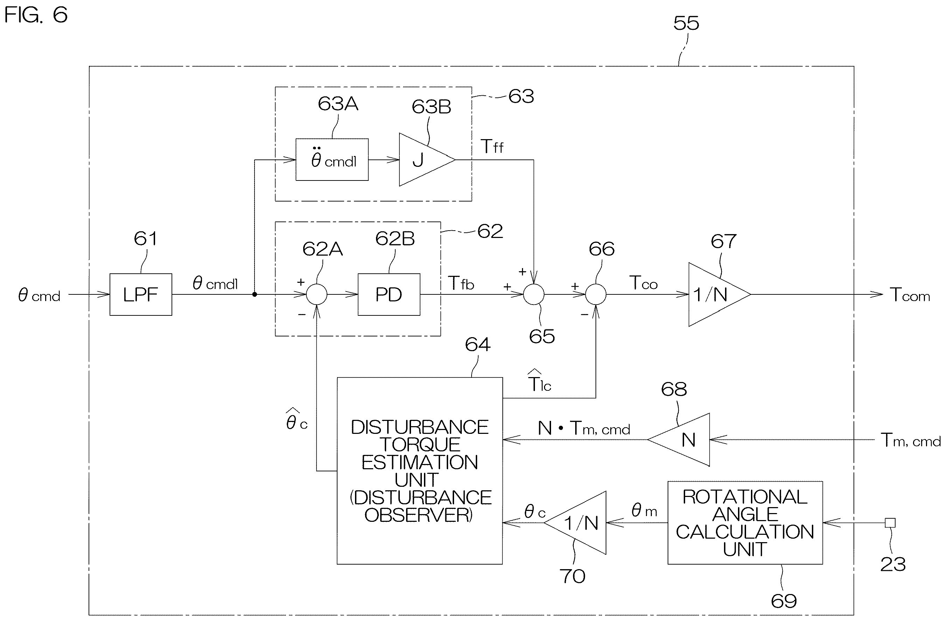

FIG. 6 is a block diagram showing the configuration of the angle control unit 55.

The angle control unit 55 calculates the integrated motor torque command value $T_{com}$ based on the integrated angle command value $\theta_{cmd}$. The angle control unit 55 includes a low-pass filter (LPF) 61, a feedback control unit 62, a feedforward control unit 63, a disturbance torque estimation unit 64, a torque addition unit 65, a disturbance torque compensation unit 66, a first reduction ratio division unit 67, a reduction ratio multiplication unit 68, a rotational angle calculation unit 69, and a second reduction ratio division unit 70.

The reduction ratio multiplication unit 68 converts the motor torque command value $T_{m,cmd}$ calculated by the addition unit 58 (see FIG. 2) into an output shaft torque command value $N \cdot T_{m,cmd}$ that acts on the output shaft 9 (worm wheel 21) by multiplying the motor torque command value $T_{m,cmd}$ by the reduction ratio N of the speed reducer 19.

The rotational angle calculation unit 69 calculates a rotor rotational angle $\theta_m$ of the electric motor 18 based on an output signal from the rotational angle sensor 23. The second reduction ratio division unit 70 converts the rotor rotational angle $\theta_m$ calculated by the rotational angle calculation unit 69 into a rotational angle (actual steering angle) $\theta_c$ of the output shaft 9 by dividing the rotor rotational angle $\theta_m$ by the reduction ratio N.

In the present embodiment, the actual steering angle $\theta_c$ is expressed as a rotational amount (rotational angle) from the neutral position of the output shaft 9. The rotational amount in the rightward steering direction from the neutral position is expressed as a positive value, and the rotational amount in the leftward steering direction from the neutral position is expressed as a negative value.

The low-pass filter 61 performs a low-pass filtering process on the integrated angle command value $\theta_{cmd}$. An integrated angle command value $\theta_{cmdl}$ after the low-pass filtering process is provided to the feedback control unit 62 and the feedforward control unit 63. The low-pass filter 61 may be omitted.

The feedback control unit 62 is provided to bring an estimated steering angle value $\hat{\theta}$ calculated by the disturbance torque estimation unit 64 closer to the integrated angle command value $\theta_{cmdl}$ after the low-pass filtering process. The feedback control unit 62 includes an angle deviation calculation unit 62A and a PD control unit 62B. The angle deviation calculation unit 62A calculates a deviation $\Delta\theta$ $(= \theta_{cmdl} - \hat{\theta}_c)$ between the integrated angle command value $\theta_{cmdl}$ and the estimated steering angle value $\hat{\theta}_c$. The angle deviation calculation unit 62A may calculate, as the angle deviation $\Delta\theta$, a deviation $(\theta_{cmdl} - \theta_c)$ between the integrated angle command value $\theta_{cmdl}$ and the actual steering angle $\theta_c$ calculated by the second reduction ratio division unit 70.

The PD control unit 62B calculates feedback control torque $T_{fb}$ by performing PD calculation (proportional-derivative calculation) for the angle deviation $\Delta\theta$ calculated by the angle deviation calculation unit 62A. The feedback control torque $T_{fb}$ is provided to the torque addition unit 65.

The feedforward control unit 63 is provided to improve control response by compensating for a delay in response due to the inertia of the electric power steering system 1. The feedforward control unit 63 includes an angular acceleration calculation unit 63A and an inertia multiplication unit 63B. The angular acceleration calculation unit 63A calculates a target angular acceleration $d^2\theta_{cmdl}/dt^2$ by obtaining the second derivative of the integrated angle command value $\theta_{cmdl}$.

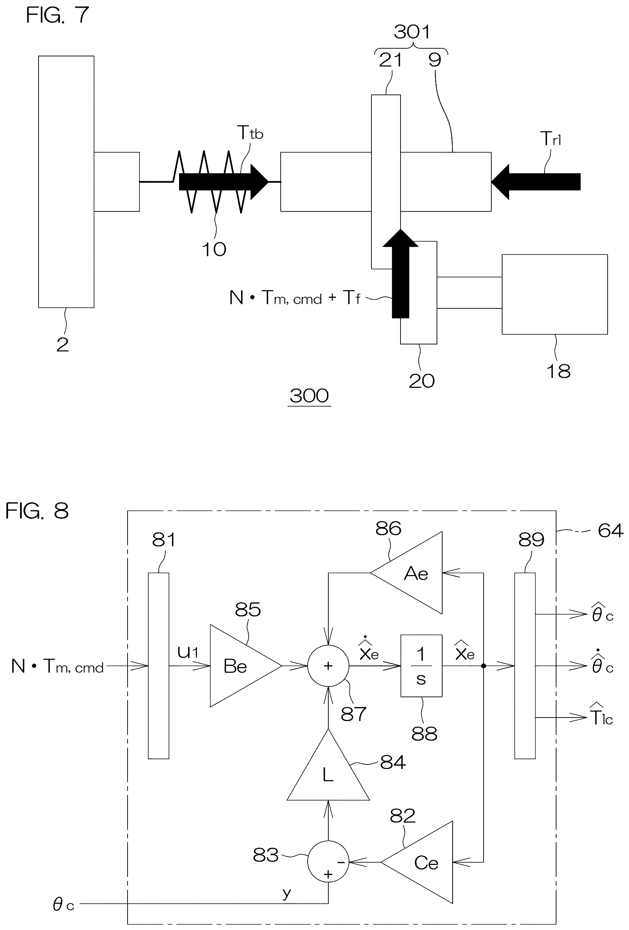

The inertia multiplication unit 63B calculates feedforward control torque $T_{ff}$ $(= J \cdot d^2\theta_{cmdl}/dt^2)$ by multiplying the target angular acceleration $d^2\theta_{cmdl}/dt^2$ calculated by the angular acceleration calculation unit 63A by inertia J of the electric power steering system 1. The inertia J is obtained from, for example, a physical model of the electric power steering system 1 (see FIG. 7) described later. The feedforward control torque $T_{ff}$ is provided to the torque addition unit 65 as an inertia compensation value.

The torque addition unit 65 calculates a basic torque command value $(T_{fb} + T_{ff})$ by adding the feedforward control torque $T_{ff}$ to the feedback control torque $T_{fb}$.

The disturbance torque estimation unit 64 is provided to estimate non-linear torque (disturbance torque: torque other than the motor torque) that is generated as disturbance in a plant (object to be controlled by the electric motor 18). The disturbance torque estimation unit 64 estimates the disturbance torque (disturbance load) $T_{lc}$, the steering angle $\theta$, and a steering angle derivative (angular velocity) $d\theta_c/dt$ based on the output shaft torque command value $N \cdot T_{m,cmd}$ and the

actual steering angle $\theta_c$. The estimated values of the disturbance torque $T_{lc}$, the steering angle $\theta_c$, and the steering angle derivative (angular velocity) $d\theta_c/dt$ are represented by $^\wedge T_{lc}$, $^\wedge\theta_c$, and $d^\wedge\theta_c/dt$, respectively. The disturbance torque estimation unit 64 will be described in detail later.

The estimated disturbance torque value $^\wedge T_{lc}$ calculated by the disturbance torque estimation unit 64 is provided to the disturbance torque compensation unit 66 as a disturbance torque compensation value. The estimated steering angle value $^\wedge\theta_c$ calculated by the disturbance torque estimation unit 64 is provided to the angle deviation calculation unit 62A.

The disturbance torque compensation unit 66 calculates an integrated torque command value $T_{co}$ (= $T_{fb} + T_{ff}-$ $^\wedge T_{lc}$) by subtracting the estimated disturbance torque value $^\wedge T_{lc}$ from the basic torque command value ($T_{fb} + T_{ff}$). The integrated torque command value $T_{co}$ (torque command value for the output shaft 9) with the disturbance torque compensated for is thus obtained.

The integrated torque command value $T_{co}$ is provided to the first reduction ratio division unit 67. The first reduction ratio division unit 67 calculates the integrated motor torque command value $T_{com}$ (torque command value for the electric motor 18) by dividing the integrated torque command value $T_{co}$ by the reduction ratio N. The integrated motor torque command value $T_{com}$ is provided to the second switch 57 (see FIG. 2).

The disturbance torque estimation unit 64 will be described in detail. The disturbance torque estimation unit 64 is a disturbance observer that estimates the disturbance torque $T_{lc}$, the steering angle $\theta_c$, and the angular velocity $d\theta_c/dt$ using, for example, a physical model 300 of the electric power steering system 1 shown in FIG. 7.

The physical model 300 includes a plant (example of an object to be driven by the motor) 301 that includes the output shaft 9 and the worm wheel 21 fixed to the output shaft 9. The torsion bar torque $T_{tb}$ is applied from the steering wheel 2 to the plant 301 via the torsion bar 10, and the road reaction torque $T_{rl}$ is applied from the steered wheel 3 side to the plant 301.

Moreover, the output shaft torque command value $N \cdot T_{m,cmd}$ is applied to the plant 301 via the worm gear 20, and the friction torque $T_f$ is applied to the plant 301 due to the friction between the worm wheel 21 and the worm gear 20.

An equation of motion for the inertia of the physical model 300 is given by the following expression (4), where J is the inertia of the plant 301.

[Math. 4]

$$J\ddot{\theta}_c = N \cdot T_{m,cmd} + T_{lc} \quad \cdots (4)$$

$\cdots(4)$

$$T_{lc} = T_{tb} + T_{rl} + T_f$$

$d^2\theta_c/dt^2$ is the angular acceleration of the plant 301. N is the reduction ratio of the speed reducer 19. $T_{lc}$ represents the disturbance torque other than the motor torque that is applied to the plant 301. While the disturbance torque $T_{lc}$ is shown as the sum of the torsion bar torque $T_{tb}$, the road reaction torque $T_{rl}$, and the friction torque $T_f$ in the present embodiment, the disturbance torque $T_{lc}$ actually includes torque other than these.

An equation of state for the physical model 300 in FIG. 7 is given by the following expression (5).

[Math. 5]

$$\begin{cases} \dot{x} = Ax + B_1 u_1 + B_2 u_2 \\ y = Cx + Du_1 \end{cases} \quad \cdots (5)$$

In the above expression (5), x is a state variable vector, $u_l$ is a known input vector, $u_2$ is an unknown input vector, and y is an output vector (measured value). In the above expression (5), A is a system matrix, $B_1$ is a first input matrix, $B_2$ is a second input matrix, C is an output matrix, and D is a direct feedthrough matrix.

The above equation of state is extended to a system including the unknown input vector $u_2$ as one of the states. An equation of state of the extended system (extended equation of state) is given by the following expression (6).

[Math. 6]

$$\begin{cases} \dot{x}_e = A_e x_e + B_e u_1 \\ y = C_e x_e \end{cases} \quad \cdots (6)$$

In the above expression (6), $x_e$ is a state variable vector of the extended system, and is given by the following expression (7).
[Math. 7]

$$x_e = \begin{bmatrix} x \\ u2 \end{bmatrix} \quad \cdots (7)$$

In the above expression (6), $A_e$ is a system matrix of the extended system, $B_e$ is a known input matrix of the extended system, and $C_e$ is an output matrix of the extended system.

A disturbance observer (extended state observer) given by the equation of the following expression (8) is constructed from the extended equation of state given by the above expression (6).
[Math. 8]

$$\begin{cases} \dot{\hat{x}}_e = A_e\hat{x}_e + B_eu1 + L(y - \hat{y}) \\ \hat{y} = C_e\hat{x}_e \end{cases} \quad \cdots (8)$$

In the expression (8), $^\wedge x_e$ represents an estimated value of $x_e$. L is an observer gain. $^\wedge y$ represents an estimated value of y. $^\wedge x_e$ is given by the following expression (9).
[Math. 9]

$$\hat{x}_e = \begin{bmatrix} \hat{\theta}_c \\ \dot{\hat{\theta}}_c \\ \hat{T}_{lc} \end{bmatrix} \quad \cdots (9)$$

In the expression (9), $^\wedge\theta_c$ is an estimated value of $\theta_c$, and $^\wedge T_{lc}$ is an estimated value of $T_{lc}$.

The disturbance torque estimation unit 64 calculates the state variable vector $^\wedge x_e$ based on the equation of the above expression (8).

FIG. 8 is a block diagram showing the configuration of the disturbance torque estimation unit 64.

The disturbance torque estimation unit 64 includes an input vector input unit 81, an output matrix multiplication unit 82, a first addition unit 83, a gain multiplication unit 84, an input matrix multiplication unit 85, a system matrix multiplication unit 86, a second addition unit 87, an integration unit 88, and a state variable vector output unit 89.

The output shaft torque command value $N \cdot T_{m,cmd}$ calculated by the reduction ratio multiplication unit 68 (see FIG. 6) is provided to the input vector input unit 81. The input vector input unit 81 outputs the input vector $u_1$.

The output of the integration unit 88 is the state variable vector $^\wedge x_e$ (see the above expression (9)). At the start of the calculation, an initial value is given as the state variable vector $^\wedge x_e$. The initial value of the state variable vector $^\wedge x_e$ is, for example, 0.

The system matrix multiplication unit 86 multiplies the state variable vector $^\wedge x_e$ by the system matrix $A_e$. The output matrix multiplication unit 82 multiplies the state variable vector $^\wedge x_e$ by the output matrix $C_e$.

The first addition unit 83 subtracts the output $(C_e \cdot ^\wedge x_e)$ of the output matrix multiplication unit 82 from the output vector (measured value) y that is the actual steering angle $\theta_c$ calculated by the second reduction ratio division unit 70 (see FIG. 6). That is, the first addition unit 83 calculates the difference $(y - ^\wedge y)$ between the output vector y and the estimated output vector value $^\wedge y (= C_e \cdot ^\wedge x_e)$. The gain multiplication unit 84 multiplies the output $(y - ^\wedge y)$ of the first addition unit 83 by the observer gain L (see the above expression (8)).

The input matrix multiplication unit 85 multiplies the input vector $u_1$ output from the input vector input unit 81 by the input matrix $B_e$. The second addition unit 87 calculates a derivative $d^\wedge x_e/dt$ of the state variable vector by adding the output $(B_e \cdot u_1)$ of the input matrix multiplication unit 85, the output $(A_e \cdot ^\wedge x_e)$ of the system matrix multiplication unit 86, and the output $(L(y - ^\wedge y))$ of the gain multiplication unit 84. The integration unit 88 calculates the state variable vector $^\wedge x_e$ by integrating the output $(d^\wedge x_e/dt)$ of the second addition unit 87. The state variable vector output unit 89 calculates the estimated disturbance torque value $^\wedge T_{lc}$, the estimated steering angle value $^\wedge\theta_c$, and the estimated angular velocity value $d^\wedge\theta_c/dt$ based on the state variable vector $^\wedge x_e$.

Unlike the extended state observer described above, a typical disturbance observer is composed of an inverse model of the plant and a low-pass filter. An equation of motion of the plant is given by the expression (3) as described above. The inverse model of the plant is therefore given by the following expression (10).
[Math. 10]

$$T_{lc} = J\ddot{\theta}_c - N \cdot T_{m,cmd} \quad \cdots (10)$$

The inputs to the typical disturbance observer are $J \cdot d^2\theta_c/dt^2$ and $N \cdot T_{m,cmd}$. Since the second derivative of the actual steering angle $\theta_c$ is used, noise of the rotational angle sensor 23 has a great influence. The extended state observer according to the above embodiment estimates the disturbance torque using an integral type. Therefore, the influence of noise due to differentiation can be reduced.

The typical disturbance observer composed of the inverse model of the plant and the low-pass filter may be used as the disturbance torque estimation unit 64.

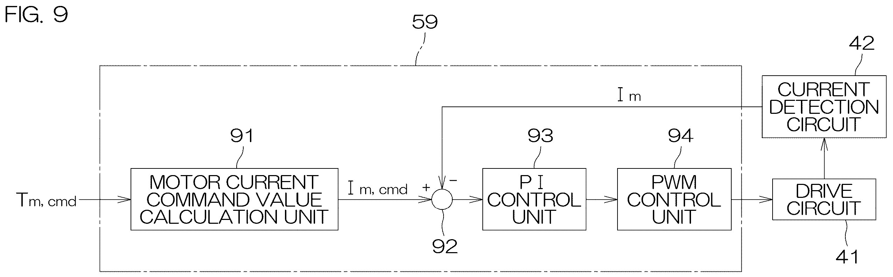

FIG. 9 is a schematic diagram showing the configuration of the torque control unit 59.

The torque control unit 59 (see FIG. 2) includes a motor current command value calculation unit 91, a current deviation calculation unit 92, a PI control unit 93, and a PWM (Pulse Width Modulation) control unit 94.

The motor current command value calculation unit 91 calculates a motor current command value $I_{m,cmd}$ by dividing the motor torque command value $T_{m,cmd}$ calculated by the addition unit 58 (see FIG. 2) by a torque constant $K_t$ of the electric motor 18.

The current deviation calculation unit 92 calculates a deviation $\Delta I$ (= $I_{m,cmd}$ - $I_m$) between the motor current command value $I_{m,cmd}$ obtained by the motor current command value calculation unit 91 and the motor current $I_m$ detected by the current detection circuit 42.

The PI control unit 93 generates a drive command value for controlling the motor current $I$ flowing through the electric motor 18 to the motor current command value $I_{m,cmd}$ by performing PI calculation (proportional-integral calculation) for the current deviation $\Delta I$ calculated by the current deviation calculation unit 92. The PWM control unit 94 generates a PWM control signal with a duty cycle corresponding to the drive command value, and supplies the PWM control signal to the drive circuit 41. Electric power corresponding to the drive command value is thus supplied to the electric motor 18.

A weight setting process that is performed by the weight setting unit 52 will be described below.

First, description will be given of a change in ability of the vehicle to follow the target travel line depending on the magnitude of the weight W in the manual steering command value calculation unit 53.

As described above, the manual steering command value calculation unit 53 calculates the manual steering command value $\theta_{md}$ using ($k_{md} \cdot \theta_{md} + W \cdot k_{md} \cdot \theta_{ad}$) and ($c_{md} \cdot d\theta_{md}/dt + W \cdot c_{md} \cdot d\theta_{ad}/dt$) as the virtual spring reaction force $k_{md} \cdot \theta_{col}$ and the virtual damper reaction force $c_{md} \cdot d\theta_{col}/dt$ in the above expression (2), respectively.

Referring to FIGS. 2 and 6, in the cooperative steering mode, the electric motor 18 is controlled, for example, such that the actual steering angle $\theta_c$ follows the integrated angle command value $\theta_{cmd}$. Assuming that the actual steering angle $\theta_c$ completely follows the integrated angle command value $\theta_{cmd}$, a relationship of $\theta_{md} = \theta_c - \theta_{ad}$ holds.

In this case, the first virtual spring reaction force $k_{md} \cdot \theta_{md}$ (virtual spring reaction force according to the manual steering command value $\theta_{md}$) in the above expression (3) is given by the following expression (11).

[Math. 11]

$$k_{md} \cdot \theta_{md} = k_{md} \cdot (\theta_c - \theta_{ad})$$
$$= k_{md} \cdot \theta_c - k_{md} \cdot \theta_{ad} \quad \cdots (11)$$

Similarly, the first virtual damper reaction force $c_{md} \cdot d\theta_{md}/dt$ (virtual damper reaction force according to the manual steering command value $\theta_{md}$) in the above expression (3) is given by the following expression (12).

[Math. 12]

$$c_{md} \cdot \dot{\theta}_{md} = C_{md} \cdot (\dot{\theta}_c - \dot{\theta}_{ad}) = c_{md} \cdot \dot{\theta}_c - c_{md} \cdot \dot{\theta}_{ad} \tag{12}$$

That is, the first virtual spring reaction force $k_{md} \cdot \theta_{md}$ includes an actual steering angle component $k_{md} \cdot \theta_c$ according to the actual steering angle $\theta_c$, and an automatic steering component $-k_{md} \cdot \theta_{ad}$ according to the automatic steering command value $\theta_{ad}$. Similarly, the first virtual damper reaction force $c_{md} \cdot d\theta_{md}/dt$ includes an actual steering angle component $c_{md} \cdot d\theta_c/dt$ according to the first derivative of the actual steering angle $\theta_c$, and an automatic steering component $-c_{md} \cdot d\theta_{ad}/dt$ according to the first derivative of the automatic steering command value $\theta_{ad}$.

Assuming that the expression (11) and the expression (12) hold, the above expression (3) is given by the following expression (13).

[Math. 13]

$$_{md} \cdot \ddot{\theta}_{md} = T_{tb} + N \cdot T_{as} - (k_{md} \cdot \theta_c - k_{md} \cdot \theta_{ad} + W \cdot k_{md} \cdot \theta_{ad}) - (c_{md} \cdot \dot{\theta}c - c_{md} \cdot \dot{\theta}ad + W \cdot c_{md} \cdot \dot{\theta}_{ad}) \tag{13}$$

When W = 0, the above expression (13) is equivalent to the above expression (2). Therefore, in the cooperative steering mode, a driving assistance force according to the automatic steering command value $\theta_{ad}$ acts as in the comparative method. That is, the ability of the vehicle to follow the target travel line is enhanced.

When W = 1, the above expression (13) is given by the following expression (14).

[Math. 14]

$$J_{md} \cdot \ddot{\theta}_{md} = T_{tb} + N \cdot T_{as} - k_{md} \cdot \theta_c - c_{md} \cdot \dot{\theta}_c \qquad \cdots (14)$$

That is, when W = 1, the virtual spring reaction force is $k_{md} \cdot \theta_c$, and the automatic steering component $-k_{md} \cdot \theta_{ad}$ according to the automatic steering command value $\theta_{ad}$ is zero. Similarly, when W = 1, the virtual damper reaction force is $c_{md} \cdot d\theta_c/dt$, and the automatic steering component $-c_{md} \cdot d\theta_{ad}/dt$ according to the first derivative of the automatic steering command value $\theta_{ad}$ is zero. That is, when W = 1, the driving assistance force according to the automatic steering command value $\theta_{ad}$ does not act. That is, the vehicle does not exert the ability to follow the target travel line.

When W is in a range of 0 < W < 1, cooperative control is performed such that the ability of the vehicle to follow the target travel line is lessened from the basic characteristic where W = 0. In this case, the ability of the vehicle to follow the target travel line is lessened as W increases.

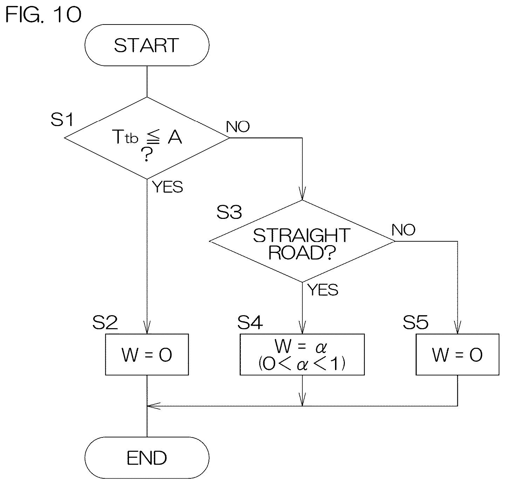

FIG. 10 is a flowchart showing the procedure of the weight setting process that is performed by the weight setting unit 52. The process in FIG. 10 is repeatedly performed at every predetermined calculation cycle. The initial value of W is assumed to be 0.

The weight setting unit 52 first determines whether the torsion bar torque $T_{tb}$ is equal to or smaller than a predetermined threshold value A (A > 0) (step S1). The threshold value A is a threshold value for determining whether the driver is gripping the steering wheel (hands-on state) or is not gripping the steering wheel (hands-off state).

When the torsion bar torque $T_{tb}$ is equal to or smaller than the threshold value A (step S1: YES), the weight setting unit 52 determines that the current state is the hands-off state, and sets the weight W to zero (step S2). That is, in the hands-off state, W is set to enhance the ability of the vehicle to follow the target travel line. The reason is that the vehicle is unable to follow the target travel line when the ability of the vehicle to follow the target travel line is lessened in the hands-off state.

When determination is made in step S1 that the torsion bar torque $T_{tb}$ is equal to or smaller than the threshold value A, W may be set to a value close to zero and equal to or larger than zero. When the process of step S2 is performed, the weight setting unit 52 ends the process in the current calculation cycle.

In step S1, a sensor for determining whether the driver has made contact may be attached to the steering wheel, and determination may be made as to whether the contact pressure or the contact period is equal to or smaller than a predetermined threshold value B (B > 0).

When determination is made in step S1 that the torsion bar torque $T_{tb}$ is larger than the threshold value A (step S1: NO), the weight setting unit 52 determines that the current state is the hands-on state, and determines whether the travel lane is a straight road (step S3). In the present embodiment, the weight setting unit 52 determines that the travel lane is a straight road when the curvature $\rho$ is equal to or smaller than a predetermined threshold value C (C > 0), and determines that the travel lane is a curved road when the curvature $\rho$ is larger than the threshold value C.

When the travel lane is a straight road (step S3: YES), the weight setting unit 52 sets W to a predetermined value $\alpha$ in a range larger than 0 and smaller than 1 (0 < $\alpha$ < 1) (step S4). That is, in the present embodiment, the weight setting unit 52 sets, as $\alpha$, a value larger than the weight set in step S2. In the present embodiment, $\alpha$ is set to 0.7. Therefore, the ability of the vehicle to follow the target travel line is lessened compared to the case where W = 0. In other words, the driving assistance force according to the automatic steering command value $\theta_{ad}$ is reduced compared to the case where the manual steering command value $\theta_{md}$ is generated by the comparative method. Thus, the driver's steering feel can be improved in the driving assistance mode.

When determination is made in step S3 that the travel lane is a straight road, W is preferably set to the predetermined value $\alpha$ in the range larger than 0 and smaller than 1 (0 < $\alpha$ < 1), but may be set to 1. When the process of step S4 is performed, the weight setting unit 52 ends the process in the current calculation cycle.

When determination is made in step S3 that the travel lane is a curved road (step S3: NO), the weight setting unit 52 sets W to zero (step S5). That is, in the present embodiment, the weight setting unit 52 sets, as the weight, a value smaller than the weight set in step S4. That is, when the travel lane is a curved road, W is set to enhance the ability of the vehicle to follow the target travel line. The reason is that the vehicle is likely to deviate from the target travel line on the curved road due to the centrifugal force acting on the vehicle.

When determination is made in step S3 that the travel lane is a curved road, W may be set to a value close to zero and equal to or larger than zero. When determination is made in step S3 that the travel lane is a curved road, a value equal to or larger than the weight set in step S4 may be set as the weight. When the process of step S5 is performed, the weight setting unit 52 ends the process in the current calculation cycle.

The operation of the present embodiment will be described below with reference to FIG. 2.

In the present embodiment, the manual steering mode refers to a steering mode in which the electric motor 18 is controlled based only on the assist torque command value $T_{as}$. The cooperative steering mode refers to a steering mode in which the electric motor 18 is controlled based on the integrated angle command value $\theta_{cmd}$ obtained by considering both the automatic steering command value $\theta_{ad}$ and the manual steering command value $\theta_{md}$.

When the steering mode is set to the manual steering mode, the first switch 56 is ON and the second switch 57 is OFF. When the steering mode is set to the cooperative steering mode, the first switch 56 is OFF and the second switch 57 is ON. That is, the motor control ECU 202 can switch the steering mode between the manual steering mode and the cooperative steering mode by the driver's operation on the mode switches 31, 32.

In the above embodiment, the steering mode can be switched between the cooperative steering mode in which the electric motor 18 can be controlled based on the integrated angle command value $\theta_{cmd}$ and the manual steering mode in which the electric motor 18 can be controlled based only on the assist torque command value $T_{as}$.

That is, in the electric power steering system 1 that can control the electric motor 18 based on the integrated angle command value $\theta_{cmd}$, the electric motor 18 can be controlled based only on the assist torque command value $T_{as}$.

In the above embodiment, in the manual steering mode, the electric motor 18 is controlled based only on the assist torque command value $T_{as}$. Therefore, the driver can receive the actual road reaction torque.

In the above embodiment, in the cooperative steering mode, the manual steering command value calculation unit 53 calculates the manual steering command value $\theta_{md}$ using $(k_{md} \cdot \theta_{md} + W \cdot k_{md} \cdot \theta_{ad})$ and $(c_{md} \cdot d\theta_{md}/dt + W \cdot c_{md} \cdot d\theta_{ad}/dt)$ as the virtual spring reaction force $k_{md} \cdot \theta_{col}$ and the virtual damper reaction force $c_{md} \cdot d\theta_{col}/dt$ in the above expression (2), respectively.

Therefore, it is possible to adjust the ability of the vehicle to follow the target travel line by changing the weight W. Thus, the driver's steering feel can be improved in the driving assistance mode.

In the above embodiment, the weight W for multiplication of the second virtual damper reaction force $c_{md} \cdot d\theta_{ad}/dt$ is the same as the weight W for multiplication of the second virtual spring reaction force $k_{md} \cdot \theta_a$. However, the weight W for multiplication of the second virtual damper reaction force $c_{md} \cdot d\theta_{ad}/dt$ may be different from the weight W for multiplication of the second virtual spring reaction force $k_{md} \cdot \theta_a$.

In the above embodiment, $(k_{md} \cdot \theta_{md} + W \cdot k_{md} \cdot \theta_{ad})$ is used as the virtual spring reaction force $k_{md} \cdot \theta_{col}$ in the above expression (2), and the virtual damper reaction force $(c_{md} \cdot d\theta_{md}/dt + W \cdot c_{md} \cdot d\theta_{ad}/dt)$ is used as the virtual damper reaction force $c_{md} \cdot d\theta_{col}/dt$ in the above expression (2). However, $(k_{md} \cdot \theta_{md} + W \cdot k_{md} \cdot \theta_{ad})$ may be used as the virtual spring reaction force $k_{md} \cdot \theta_{col}$ in the above expression (2), but $c_{md} \cdot d\theta_{md}/dt$ may be used as the virtual damper reaction force $c_{md} \cdot d\theta_{col}/dt$ in the above expression (2).

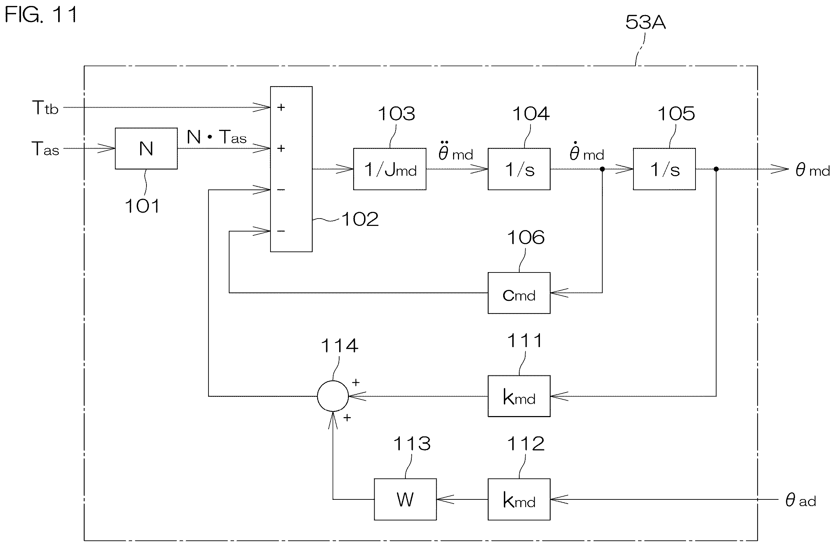

In this case, the manual steering command value calculation unit has a configuration shown in FIG. 11. In FIG. 11, portions corresponding to those in FIG. 5 described above are represented by the same signs as those in FIG. 5.

A manual steering command value calculation unit 53A in FIG. 11 does not include the differentiation unit 107, the second virtual damper reaction force calculation unit 108, the first weight multiplication unit 109, and the first addition unit 110 of the manual steering command value calculation unit 53 in FIG. 5. The first virtual damper reaction force $c_{md} \cdot d\theta_{md}/dt$ calculated by the first virtual damper reaction force calculation unit 106 is fed back to the addition/subtraction unit 102 as the virtual damper reaction force.

In this case, the manual steering command value calculation unit 53A calculates the manual steering command value $\theta_{md}$ based on an equation of motion given by the following expression (15).

[Math. 15]

$$J_{md} \cdot \ddot{\theta}_{md} = T_{tb} + N \cdot T_{as} - (k_{md} \cdot \theta_{md} + W \cdot k_{md} \cdot \theta_{ad}) - c_{md} \cdot \dot{\theta}_{md}$$

$$\cdots (15)$$

In the expression (15), $k_{md} \cdot \theta_{md} + W \cdot k_{md} \cdot \theta_{ad}$ is the virtual spring reaction force. $c_{md} \cdot d\theta_{md}/dt$ is the virtual damper reaction force.

That is, the manual steering command value calculation unit 53A calculates the manual steering command value $\theta_{md}$ using $(k_{md} \cdot \theta_{md} + W \cdot k_{md} \cdot \theta_{ad})$ and $c_{md} \cdot d\theta_{md}/dt$ as the virtual spring reaction force $k_{md} \cdot \theta_{md}$ and the virtual damper reaction force $c_{md} \cdot d\theta_{col}/dt$ in the above expression (2), respectively.

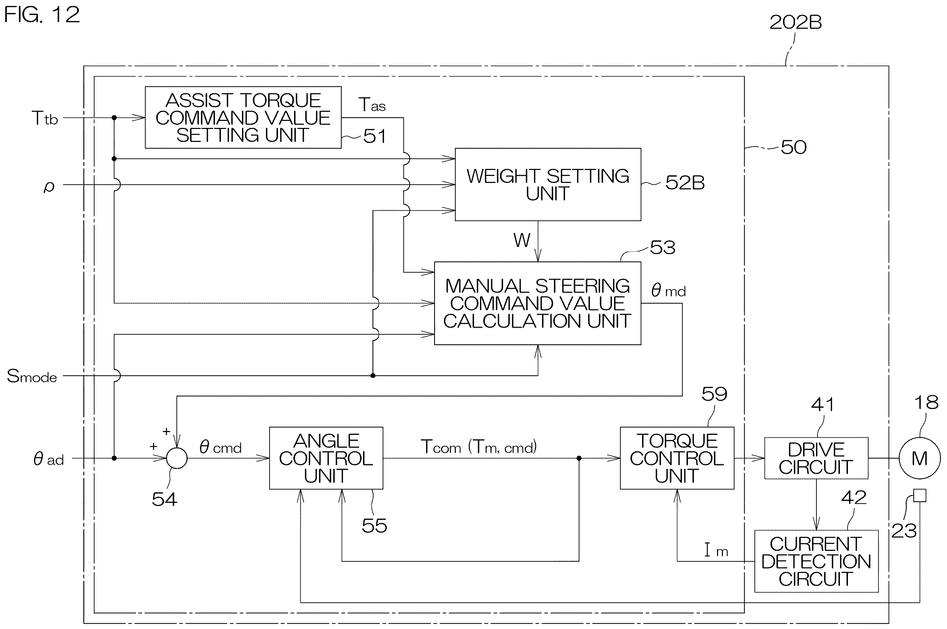

FIG. 12 is a block diagram showing a modification of the motor control ECU. In FIG. 12, portions corresponding to those in FIG. 2 described above are represented by the same signs as those in FIG. 2.

A motor control ECU 202B in FIG. 12 is different from the motor control ECU 202 in FIG. 2 in terms of (1), (2), and (3) below.

(1) The first switch 56, the second switch 57, and the addition unit 58 in FIG. 2 are not provided.
(2) The torsion bar torque $T_{tb}$ detected by the torque sensor 12, the curvature $\rho$ provided from the higher-level ECU 201, and the steering mode signal $S_{mode}$ are input to a weight setting unit 52B.

(3) The operation of the weight setting unit 52B is different from the operation of the weight setting unit 52 in FIG. 2.

In the present modification, the integrated motor torque command value $T_{com}$ obtained by the angle control unit 55 is provided to the torque control unit 59 as the motor torque command value $T_{m,cmd}$. Therefore, the electric motor 18 is controlled based on the integrated motor torque command value $T_{com}$ (integrated angle command value $\theta_{cmd}$) not only when the steering mode is the cooperative steering mode but also when the steering mode is the manual steering mode. In the present modification, the automatic steering command value $\theta_{ad}$ is set to zero when the steering mode is the manual steering mode.

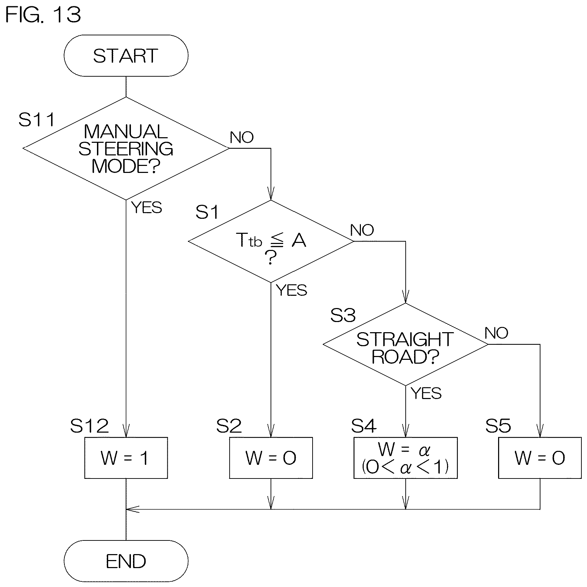

FIG. 13 is a flowchart showing the procedure of a weight setting process that is performed by the weight setting unit 52B. In FIG. 13, steps corresponding to the steps in FIG. 10 are represented by the same step numbers as those in FIG. 10.

The process in FIG. 13 is repeatedly performed at every predetermined calculation cycle. The initial value of W is assumed to be 0.

The weight setting unit 52B first determines whether the steering mode is the manual steering mode based on the steering mode signal $S_{mode}$ (step S11).

When the steering mode is the manual steering mode (step S11: YES), the weight setting unit 52B sets the weight W to 1 (step S12). That is, when the steering mode is the manual steering mode, there is no need to cause the vehicle to follow the target travel line. Therefore, W is set to lessen the ability of the vehicle to follow the target travel line. When the process of step S12 is performed, the weight setting unit 52B ends the process in the current calculation cycle.

When determination is made in step S11 that the steering mode is the cooperative steering mode (step S11: NO), the weight setting unit 52B proceeds to step S1. Then, the weight setting unit 52B performs the process from step S1 onward described with reference to FIG. 10.

Although the embodiment and modification of the present disclosure are described above, the present disclosure may also be implemented in other forms.

In the above embodiment and modification, the weight setting unit 52, 52B sets the weight W based on the torsion bar torque $T_{tb}$ and the curvature (example of surrounding environment information) $\rho$. However, the weight setting unit 52, 52B may set the weight W based only on the torsion bar torque $T_{tb}$, or may set the weight W based only on the curvature (example of surrounding environment information) $\rho$. The weight setting unit 52, 52B preferably sets the weight based on at least the torsion bar torque $T_{tb}$ out of the torsion bar torque $T_{tb}$ and the curvature $\rho$.

When the weight W is set based only on the torsion bar torque $T_{tb}$, steps S3, S5 are omitted in FIGS. 10 and 13. That is, in FIGS. 10 and 13, when determination is made in step S1 that $T_{tb} > A$, the weight setting unit 52, 52B proceeds to step S4.

When the weight W is set based only on the curvature $\rho$, steps S1, S2 are omitted in FIGS. 10 and 13. That is, in FIG. 10, the weight setting unit 52 first performs the process of step S3. In FIG. 13, when determination is made in step S11 that the steering mode is the cooperative steering mode, the weight setting unit 52B proceeds to step S3.

In the above embodiment, the spring constant $k_{md}$ in the above expressions (3), (15) is obtained through experiments, analyses, etc. in advance. However, the spring constant $k_{md}$ in the above expressions (3), (15) may be calculated based on the following expression (16) using the estimated disturbance torque value $^\wedge T_{lc}$ calculated by the disturbance torque estimation unit 64 (see FIG. 6) and the actual steering angle $\theta_c$ calculated by the second reduction ratio division unit 70.
[Math. 16]

$$k_{md} = \frac{\widehat{T}_{lc}}{\theta_c} \quad \cdots (16)$$

In the above embodiment, the viscous damping coefficient $c_{md}$ in the above expressions (3), (15) is obtained through experiments, analyses, etc. in advance.

However, the viscous damping coefficient $c_{md}$ in the above expressions (3), (15) may be calculated based on the following expression (17) using the estimated disturbance torque value $^\wedge T_{lc}$ calculated by the disturbance torque estimation unit 64 and the actual steering angle $\theta_c$ calculated by the second reduction ratio division unit 70.
[Math. 17]

$$c_{md} = \frac{\widehat{T}_{lc}}{\dot{\theta}_c} \quad \cdots (17)$$

In the above embodiment, the angle control unit 55 (see FIG. 6) includes the feedforward control unit 63. However, the feedforward control unit 63 may be omitted. In this case, the feedback control torque $T_{fb}$ calculated by the feedback control unit 62 is basic target torque.

The above embodiment illustrates the example in which the present disclosure is applied to motor control for a column type EPS. However, the present disclosure is also applicable to motor control for an EPS other than the column type. The present disclosure is also applicable to control on an electric motor for steered angle control of a steer-by-wire system.

Although the embodiment of the present disclosure is described in detail above, this is merely a specific example used to clarify the technical content of the present disclosure. The present disclosure should not be construed as being limited to the specific example, and the scope of the present disclosure is limited only by the appended claims.

This application corresponds to Japanese Patent Application No. 2023-098544 filed with the Japan Patent Office on June 15, 2023, the entire disclosure of which is incorporated herein by reference.

Description of the Reference Numerals

1 ... electric power steering system, 3 ... steered wheel, 4 ... steering operation mechanism, 18 ... electric motor, 51 ... assist torque command value setting unit, 52, 52B ... weight setting unit, 53, 53A ... manual steering command value calculation unit, 54 ... integrated angle command value calculation unit, 55 ... angle control unit, 56 ... first switch, 57 ... second switch, 58 ... addition unit, 59 ... torque control unit, 201 ... higher-level ECU, 202, 202A ... motor control ECU

**Claims**

1. A motor control device that controls drive of an electric motor of a steering device, the motor control device comprising:

    a manual steering command value calculation unit that calculates a manual steering command value using torsion bar torque;
    an integrated angle command value calculation unit that calculates an integrated angle command value by adding the manual steering command value to an automatic steering command value for driving assistance; and
    a control unit that controls the drive of the electric motor based on the integrated angle command value, wherein
    the manual steering command value calculation unit is configured to, in a driving assistance mode, calculate the manual steering command value using an equation of motion of a reference model of the steering device, and
    the manual steering command value calculation unit calculates the manual steering command value using, as a virtual spring reaction force in the equation of motion, a virtual spring reaction force obtained by adding a virtual spring reaction force according to the automatic steering command value to a virtual spring reaction force according to the manual steering command value.

2. The motor control device according to claim 1, wherein when calculating the manual steering command value, the manual steering command value calculation unit uses, as a virtual damper reaction force in the equation of motion, a virtual damper reaction force obtained by adding a virtual damper reaction force according to a derivative of the automatic steering command value to a virtual damper reaction force according to a derivative of the manual steering command value.

3. The motor control device according to claim 1, wherein the manual steering command value calculation unit performs a weighting process on the virtual spring reaction force according to the automatic steering command value using the torsion bar torque or surrounding environment information.

FIG. 1

EP 4 729 392 A1

FIG. 2

FIG. 3

ASSIST TORQUE
COMMAND VALUE($T_{as}$)

⟨LEFT⟩

O

⟨RIGHT⟩

TORSION BAR
TORQUE ($T_{tb}$)

FIG. 4

$T_{tb}$                    $N \cdot T_m$

Lower column

$J_{md}$ , $\theta_{col}$

$C_{md}$            $k_{md}$

FIG. 5

EP 4 729 392 A1

FIG. 6

EP 4 729 392 A1

FIG. 7

$$T_{tb}$$

$$N \cdot T_{m, cmd} + T_f$$

$$T_{rl}$$

301
21  9

10

2

20

18

300

FIG. 8

81

85

86

Ae

89

64

$$N \cdot T_{m, cmd}$$

u1

Be

+

$$\dot{\hat{x}}_e$$

$$\frac{1}{s}$$

$$\hat{x}_e$$

$$\hat{\theta}_c$$

$$\dot{\hat{\theta}}_c$$

$$\hat{T}_{lc}$$

87

88

L

84

83

−

+

Ce

82

$$\theta_c$$

y

FIG. 9

FIG. 10

START

S1 $T_{tb} \leqq A$ ? — NO

YES

S3 STRAIGHT ROAD? — NO

YES

S2 $W = 0$

S4 $W = \alpha$ $(0 < \alpha < 1)$

S5 $W = 0$

END

FIG. 11

FIG. 12

EP 4 729 392 A1

FIG. 13

```
                        ┌─────────────┐
                        │    START    │
                        └──────┬──────┘
                               │
                               ▼
   S11                    ╱─────────╲
                        ╱  MANUAL    ╲         NO
                       ⟨   STEERING   ⟩─────────┐
                        ╲   MODE?    ╱          │
                          ╲────────╱            │
                             │ YES              ▼
                             │       S1    ╱─────────╲
                             │           ╱            ╲    NO
                             │          ⟨  Ttb ≦ A     ⟩──────┐
                             │           ╲    ?       ╱       │
                             │             ╲────────╱         │
                             │                │ YES           ▼
                             │                │     S3   ╱──────────╲
                             │                │        ╱             ╲   NO
                             │                │       ⟨  STRAIGHT     ⟩─────┐
                             │                │        ╲   ROAD?     ╱      │
                             │                │          ╲─────────╱        │
                             │                │             │ YES           │
   S12                   S2  │            S4  │         S5  │               │
      ┌─────────┐          ┌─────────┐      ┌──────────┐  ┌─────────┐       │
      │  W = 1  │          │  W = 0  │      │  W = α   │  │  W = 0  │◄──────┘
      └────┬────┘          └────┬────┘      │(0<α<1)  │  └────┬────┘
           │                    │            └────┬─────┘       │
           │                    └──────────────┐  │  ┌──────────┘
           ◄───────────────────────────────────┴──┴──┘
           │
           ▼
   ┌─────────────┐
   │     END     │
   └─────────────┘
```

## INTERNATIONAL SEARCH REPORT

| International application No. |
| --- |
| **PCT/JP2024/014833** |

**A. CLASSIFICATION OF SUBJECT MATTER**

*B62D 6/00*(2006.01)i; *B62D 5/04*(2006.01)i
FI: B62D6/00; B62D5/04

According to International Patent Classification (IPC) or to both national classification and IPC

**B. FIELDS SEARCHED**

Minimum documentation searched (classification system followed by classification symbols)

B62D6/00; B62D5/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2023/079765 A1 (JTEKT CORP.) 11 May 2023 (2023-05-11)<br>entire text, all drawings | 1-3 |
| A | JP 2020-019346 A (JTEKT CORP.) 06 February 2020 (2020-02-06)<br>entire text, all drawings | 1-3 |
| A | JP 2023-069907 A (JTEKT CORP.) 18 May 2023 (2023-05-18)<br>entire text, all drawings | 1-3 |
| A | WO 2023/286169 A1 (JTEKT CORP.) 19 January 2023 (2023-01-19)<br>entire text, all drawings | 1-3 |
| A | JP 2021-000950 A (JTEKT CORP.) 07 January 2021 (2021-01-07)<br>entire text, all drawings | 1-3 |
| A | US 2019/0031231 A1 (STEERING SOLUTIONS IP HOLDING CORPORATION) 31 January 2019 (2019-01-31)<br>entire text, all drawings | 1-3 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/014833**

| Patent document cited in search report | | | Publication date (day/month/year) | Patent family member(s) | | | Publication date (day/month/year) |
|---|---|---|---|---|---|---|---|
| WO | 2023/079765 | A1 | 11 May 2023 | (Family: none) | | | |
| JP | 2020-019346 | A | 06 February 2020 | US | 2020/0039576 | A1 | |
| | | | | entire text, all drawings | | | |
| | | | | EP | 3608203 | A1 | |
| | | | | CN | 110775151 | A | |
| JP | 2023-069907 | A | 18 May 2023 | (Family: none) | | | |
| WO | 2023/286169 | A1 | 19 January 2023 | CN | 117652094 | A | |
| | | | | entire text, all drawings | | | |
| JP | 2021-000950 | A | 07 January 2021 | US | 2020/0398893 | A1 | |
| | | | | entire text, all drawings | | | |
| | | | | EP | 3756976 | A1 | |
| | | | | CN | 112124423 | A | |
| US | 2019/0031231 | A1 | 31 January 2019 | DE | 102018117975 | A1 | |
| | | | | entire text, all drawings | | | |
| | | | | CN | 109305215 | A | |

Form PCT/ISA/210 (patent family annex) (July 2022)

**REFERENCES CITED IN THE DESCRIPTION**

**Patent documents cited in the description**

- WO 2023286169 A

- JP 2023098544 A